# EUROPEAN PATENT APPLICATION

(11) **EP 3 333 555 A1**
(43) Date of publication of application: **13.06.2018**
(21) Application number: 17462003.9
(22) Date of filing: 08.12.2017
(51) Int. Cl.: G01G 19/02, G01G 3/12

(54) **STRUCTURAL ARRANGEMENT FOR WEIGH IN MOTION SYSTEMS**

(30) Priority: 09.12.2016 HU 1600666
(71) Applicant: Tenzi Ltd., 1029 Budapest (HU)
(72) Inventor: Elek, Károly, 1029 Budapest (HU); Schanda, Görgy Ferenc, 1029 Budapest (HU)
(74) Representative: Benkoné Csillag, Lucia

(57) **Abstract**

The invention is a structural arrangement for measurement of wheel and axle load of moving vehicles by a sensor strip(1) installed into the road surface(2), which is positioned across the entire width of the traffic lanes, inside a rabbet running in essence perpendicularly to the traffic directions, containing load cells(4) and the signal processing sub-centre(8) associated with the sensor strip(1).

Each load cell(4) contain at least one individual force-to-electronic signal converting sensor(7) and an A/D signal converter electronics connected to its electronic output. The load cell's(4) digital output is connected via cable to the signal processing sub-centre(8). Preferably the load cells(4) are 150-250mm in length, have two individual sensors(7), which are strain gauge sensors. The sensor strip(1) is seated on a synthetic resin base(9) at the bottom of the rabbet in the road surface(2) and it is fixed from the top and sides by a thin layer of flexible polymer casting agent(10) which is in level with the wearing surface of the road. Preferably high speed A/D signal converters are used, which are powered by and connected to each other and the sub-centre(8) via the contact point(6) of the neighbouring load cell's A/D signal converter electronics(5), and the cable(3) connecting the sub-centre(8) to the contact point(6) of the load cell on the edge, which cable(3) ensures the powering of the load cells(4) and also the control and data connections between the load cells(4) and the sub-centre(8). The sub-centre(8) is connected to a remote centre and/or other sub-centres via a telecommunication link.

## Description

The subject of this invention is a structural arrangement for Weigh in Motion Systems, more precisely the measurement of the wheel and axle load of moving vehicles by a device installed into the road surface. Across the entire width of the traffic lanes, in essence perpendicularly to the traffic direction, a sensor strip consisting of load cells is installed semi flexibly into a rabbet in the road surface. These load cells are made up of an electronic load sensor and an analog-digital converter. The cells are connected via a cable to each other and a data processing sub-centre. The arrangement can be used to the axle load, wheel load and load-balance measurement of moving vehicles, especially at high speed and produces more differentiated results than previously known methods.

There is a significant hauler traffic on the public road network. The main economical interest of the hauler is the maximal weight utilization of the vehicles. There are maximal legal limits on the rolling weight and the axle load in the interest of road safety and the conservation of the infrastructure. Compliance with these limits are validated by a few devices: classically by a static weight bridge, at temporary checkpoints with wheel load gauges or by axle weighbridge at speeds below 15 km/h. With the development of the analogous physical sensors and computer signal processing the possibility opened up for the instrumentation of high speed vehicles.

Piezo-sensory systems are the most prevalent solutions for axle load gauging at high speed (100 km/h). The document US 6 301 544 B1 describes a public road traffic monitoring method and arrangement with complex load gauges, where shallow rabbets are carved into the road surface perpendicularly to the traffic direction. Measuring strips are formed in these rabbets by the installation of cable connected piezo-sensors made of quartz crystals positioned at typical axle lengths. These piezo-sensors are fixed firmly at the bottom of the rabbet by epoxy mortar in a way that their force-sensing surfaces are level with the wearing surface of the asphalt layer. When the wheel of the measured vehicle rolls over a measuring strip, due to the load characteristic analogous electronic signals are generated. These signals act partly as a switch, and are also transported via cable to a shared electronic signal processing unit which in turn is connected to a remote centre. The processed signal sequence coming from following measuring strips is used to infer the speed and wheel pressure of the vehicle. Lane tracking, tire surface quality and axle load can also be inferred indirectly. At minimum four measurement strip is used, typically with two sensors per measuring strip. As the force-sensing surface of the sensors are level with the wearing surface of the road, rutting is an issue. In some cases the top edge of the sensor has to be whittled down, and they are needed to be replaced frequently.

The mechanical stress by way of electrical resistance change can be converted to analogous signal. The relatively cheap to produce strain gauge were used for wheel and axle load measurements so far in a way that required the wheel to be entirely on the measuring surface at the time of measurement. This meant that a greater load bearing structure, in practice a bridge had to be installed into the road surface, which made the application of the technology very costly. Meanwhile the accuracy of systems containing strain gauge (e.g. IRD-PAT Bending Plate System, http://www.irdinc.com/pcategory/wim-scalessensors/irdpat-bending-plate-system.html) reaches that of the higher quality piezo-sensory systems at axle load measurements.

Our goal is to develop an arrangement for measurements which can be installed cost efficiently and provides data that can be processed more diversely than the currently existing solution with regard to the full weight, axel load, wheel load and possibly the distribution of the load or the quality of the tires of the passing vehicle.
Based on our research a structural arrangement which passes on data where the location of the detected sensory input can be determined with higher accuracy requires fewer sensor strips and therefore more cost efficient and can provide data that can be processed more diversely. This means that while so far the analogous sensory data were passed on to the signal processor on a shared channel, and the analogous sensor were a half lane width unit and therefore the signal was characteristic of an area of half a lane, we believe that the signal processing should be started individually per sensory unit, as this yields more information. The decreasing size and relative low cost of the analog-digital signal converter electronics makes it possible for each individual sensor to be connected with its own signal processor and converter electronics for individual processing. Furthermore we recognised that due to the mechanical vulnerability and weather exposure of the sensors installed into the wearing surface of the road, it is better to use a sensor that can be installed deeper inside the road surface instead of the ones that can only be installed directly into the wearing surface.

The invention is therefore a structural arrangement for the measurement of moving vehicles, more precisely for the measurement of wheel and axle load by a device installed into the road surface. The arrangement consists of load cells installed into a rabbet running perpendicularly to the traffic directions, stretching across the entire width of the traffic lanes, forming a sensory strip and the associated signal processing sub-centre. Each load cell consists of at least one individual force-to-electronic signal converting sensor and the connected analog-digital signal converter electronics (A/D) which in turn is connected via cable to the signal processing sub-centre. The load cells are seated fast at the bottom of the rabbet, but surrounded by flexible filling from the sides and top, where the covering layer is in level with the wearing surface of the road. Preferably the load cells are 150-250 mm in length, consisting of two individual strain gauge sensors. The sensor strip is mounted on a synthetic resin base in a rabbet covered by a thin layer of flexible polymer casting agent from the top and the sides so that the rabbet is filled up to be in level with the road surface. The A/D signal converting electronics have micro second sampling rates. They are connected to each other and the sub-centre via the connection point of the A/D signal converter electronics of the neighbouring load cell, while the connection point of the load cell at the edge is connected to the sub-centre via cable which is connected to the power grid. The sub-centre contains a microprocessor and a power unit. The cable ensures the powering of the sensor strip and the control and data connections between the sub-centre and the load cells.

Preferably the sub-centre is connected via a telecommunication link to the data centre and/or other sub-centres.

Preferably the load cells are 200 mm in length, furthermore the sensor strip is equipped with a thermometer unit providing same time temperature data, allowing for the evaluation of the sensory data to be parameterised based on thermal conditions.

The invented structural arrangement and the potential implementation can be explained in more detail with the help of the following figures:
Figure 1.: The schematic drawing of the arrangement of the sensor strip and the sub-centre according to the invention.
Figure 2.: The schematic drawing of a load cell in the arrangement according to the invention
Figure 3.: The schematic drawing of the cross-section of the sensor strip located in the road surface.

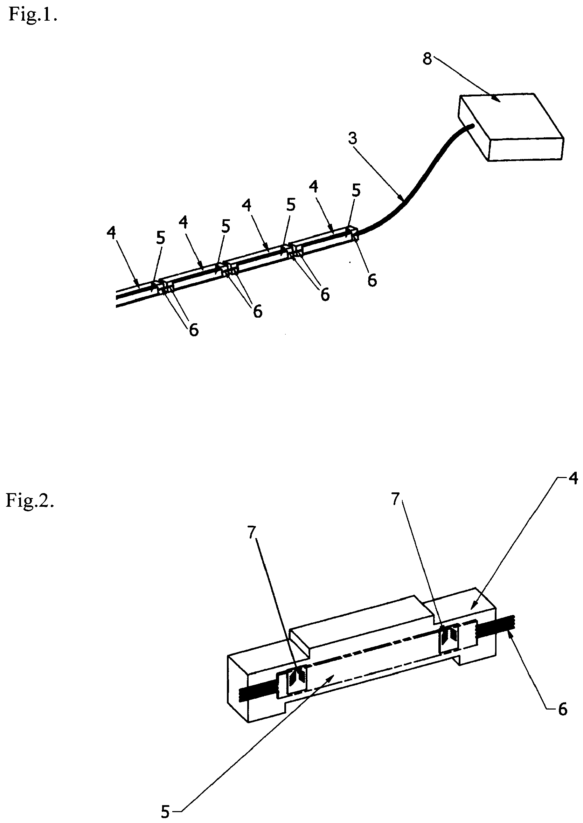

Figure 1. depicts the arrangement of the sensor strip and the sub-centre according to the invention. The sensor strip to be placed in the road surface consist of **4** load cells and the signal processing **8** sub-centre associated with the strip. Each **4** load cell contains at least one individual force-to-electronic sensor, and an analog-digital **5** signal processor connected to its electronic end point. The digital output of the **4** load cells are connected to the data processing **8** sub-centre via **3** cable. Preferably the individual sensors are strain gauge sensors, 150-250mm in length. The **5** signal converter electronics are high speed signal converters, and the **8** sub-centre contains a microprocessor, a power unit and preferably a telecommunication unit. The **5** signal converter electronics are connected to each other and the **8** sub-centre via the neighbouring **4** load cell's **5** signal converter electronics **6** connection point, and **4** load cell's **6** connection point on the edge, which in turn is connected via **3** cable to the **8** sub-centre. These connections are used to power the **4** load cells via the **3** cable, and to exchange data and commands between the **4** load cells and the **8** sub-centre.

In case of the preferred implementation the **8** sub-centre can be connected to a remote centre and/or to other sub-centres.

Figure 2. depicts the schematic drawing of a load cell of the invented arrangement. Each of **4** load cells contains at least one individual force-to-electronic signal converting 7 sensor, and a **5** signal converter connected to its electronic output, which has a digital **6** connection point. In this case the **4** load cell is 200mm in length, with two strain gauge sensors.

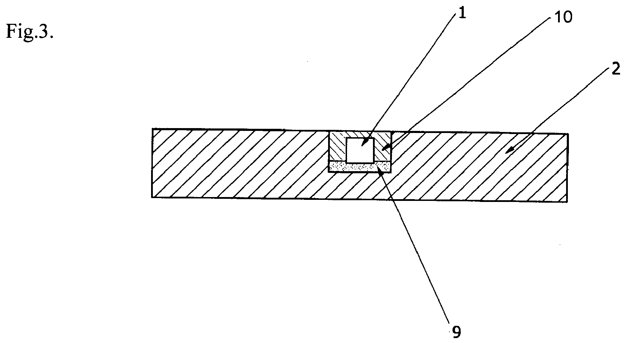

Figure 3. depicts the location of the invented arrangement's **1** sensor strip in the road surface on a schematic drawing of a cross-section. The **1** sensor strip is sitting on a **9** synthetic resin base inside a rabbet in the **2** road surface, covered by a thin layer of flexible polymer **10** casting agent from the top and the sides so that the rabbet is filled up to be in level with the **2** road surface. The moving vehicle moving past the **1** sensor strip activates the **4** load cell's individual 7 sensor via the flexible **10** casting agent. The analogous signal is forwarded from the **4** load cell to the **8** sub-centre in digitalized form.

According to our measurements, the arrangement described by the invention has numerous advantages to the previously known measuring methodologies. The applied strain gauge sensors have shown similar sensitivity and measurement reliability to piezo-sensors. The per load cell identifiable data makes it possible to determine the per wheel load, thus allowing to filter for asymmetrically loaded axles. Furthermore it allows the detection of faulty pneumatic tires, and makes the detection of an incorrect pass-through (when half the axle evades the measurement system) possible.

### Structural arrangement for Weigh in Motion Systems

**List of reference signs:**

| | | | |
|---|---|---|---|
| 1 | sensor strip | 2 | road surface |
| 3 | cable | 4 | load cell |
| 5 | signal converter electronics | 6 | connection point |
| 7 | individual sensor | 8 | sub-centre |
| 9 | synthetic resin base | 10 | filling |

## Claims

1. Structural arrangement for measurement of wheel and axle load of moving vehicles by a sensor strip(1) installed into the road surface(2), which is positioned across the entire width of the traffic lanes, inside a rabbet running in essence perpendicularly to the traffic directions, containing load cells(4) and the signal processing sub-centre(8) associated with the sensor strip(1), which load cells(4) are characterised with that each contain at least one individual force-to-electronic signal converting sensor(7) and an A/D signal converter electronics connected to its electronic output, whose digital output is connected via cable to the signal processing sub-centre(8), that contains a microprocessor.

2. The structural arrangement according to the 1 st point characterised with, that the load cells(4) are 150-250mm in length, they have two individual sensors(7), which are strain gauge sensors; and that the sensor strip(1) is seated on a synthetic resin base(9) at the bottom of the rabbet in the road surface(2) and it is fixed from the top and sides by a thin layer of flexible polymer casting agent(10) which is in level with the wearing surface of the road.

3. The structural arrangement according to the 1 st point characterised with, that the A/D signal converter electronics(5) are high speed A/D converters, which are powered by and connected to each other and the sub-centre(8) via the contact point(6) of the neighbouring load cell's A/D signal converter electronics(5), and the cable(3) connecting the sub-centre(8) to the contact point(6) of the load cell on the edge, which cable(3) ensures the powering of the load cells(4) and also the control and data connections between the load cells(4) and the sub-centre(8); furthermore the sub-centre(8) is connected to a remote centre and/or other sub-centres via a telecommunication link.
